# EUROPÄISCHE PATENTSCHRIFT

(11) **EP 0 343 451 B1**
(45) Veröffentlichungstag und Bekanntmachung des Hinweises auf die Patenterteilung: **27.10.1993**
(21) Anmeldenummer: 89108564.9
(22) Anmeldetag: 12.05.1989
(51) Int. Cl.: A01B 71/08

(54) **Schutzabdeckung für Zapfwelle**
Protective cover for a power take-off shaft
Couvercle de protection pour arbre d'accouplement

(30) Priorität: 26.05.1988 US 198885
(43) Veröffentlichungstag der Anmeldung: 29.11.1989
(73) Patentinhaber: DEERE & COMPANY, Moline, Illinois 61265 (US)
(72) Erfinder: Nusbaum, David Bruce, Shell Rock Iowa 50670 (US); Mayfield, Robert Lynn, Waterloo Iowa 50701 (US)
(74) Vertreter: Feldmann, Bernhard

(56) Entgegenhaltungen:
- AU-A- 132 970
- US-A- 4 553 950
- US-E- 30 152

## Beschreibung

Die Erfindung betrifft eine Schutzabdeckung für die Zapfwelle, insbesondere bei Kraftfahrzeugen wie Ackerschleppern, mit einem im wesentlichen U-förmigen Hauptkörper gemäß dem Oberbegriff des Patentanspruches 1.

Arbeitsfahrzeuge, wie landwirtschaftliche und industrielle Schlepper, haben eine hervorstehende Zapfwelle (PTO), durch die an Arbeitsgeräte oder andere Einrichtungen außerhalb des Fahrzeuges Antriebsleistung übertragen werden kann. Diese Zapfwelle dreht sich typischerweise mit einigen hundert Umdrehungen pro Minute und kann daher gefahrvoll sein, wenn sie offen zugänglich ist. Zum Schutz wird daher häufig ein U-förmiges Abdeckteil vorgesehen, das die Zapfwelle von oben und seitlich abdeckt, wie es beispielsweise in der US-PS 2,443,035 dargestellt ist welche die Merkmale des Oberbegriffs des Anspruches 1 zeigt. Dabei darf das Abdeckteil nicht zu eng an der Zapfwelle anliegen, da es ebenfalls üblich ist (US-PS 3,462,975), Schutzabdeckungen um die Zapfwelle vorzusehen, die sich mit dieser mitdrehen. Ferner muß innerhalb der U-förmigen Hauptabdeckung genügend Raum vorhanden sein, um Schutzabdeckungen der Anhängevorrichtung aufzunehmen.

Durch die über der Zapfwelle angeordneten Hauptschutzabdeckung wird das Ankuppeln der Welle einer Anhängevorrichtung an die Zapfwelle erschwert. Es wurde daher, beispielsweise durch die US-PS 3,389,763, schon vor längerer Zeit vorgeschlagen, die Schutzabdeckung abnehmbar auszubilden. Einige Leute haben jedoch die Schutzabdeckung abgenommen und beim Betrieb nicht wieder aufgesetzt, so daß die Zapfwelle ungeschützt blieb. Es wurden daher klappbare Schutzabdeckungen entwickelt, wie sie beispielsweise durch die US-PS Re. 30,152 bekannt geworden sind.

Diese hochklappbaren Schutzschilde haben jedoch auch gewisse Nachteile. Viele Arbeitsfahrzeuge sind mit einer Dreipunkt-Anhängevorrichtung ausgestattet, welche um die Zapfwelle angeordnet ist. Der Oberlenker der Dreipunkt-Anhängevorrichtung ist dabei üblicherweise direkt oberhalb der Hauptschutzabdeckung der Zapfwelle angeordnet. Wird die Anhängevorrichtung zu weit abgesenkt, kann der Oberlenker an die Hauptschutzabdeckung anstoßen und diese beschädigen. Durch die US-PS 4,553,950 wurde daher eine Hauptschutzabdeckung vorgeschlagen, bei der die Beschädigungsgefahr dadurch vermindert wird, daß sich die Schutzabdeckung nicht nur nach oben, sondern auch nach unten verkippen läßt.

Jedoch hat auch die zuletzt erwähnte Lösung den Nachteil, daß es auf die genaue Arbeitsweise der Bedienungsperson ankommt. Die Bedienungsperson kann es versäumen, die Schutzabdeckung herunter zu klappen, bevor der Oberlenker heruntergefahren wird. In diesem Fall kann der Oberlenker an die Hauptschutzabdeckung anstoßen und diese beschädigen. Wird diese Schutzabdeckung weder repariert noch ausgetauscht, so arbeitet das Fahrzeug wieder ohne ein zuverlässiges Schutzschild für die Zapfwelle.

Ferner kann es die Bedienungsperson auch versäumen, nach einem Ankuppelvorgang das hochgeklappte Schutzschild wieder zurück in die Schutzstellung zu kippen, bevor die Maschine in Betrieb genommen wird. Es ist dann sehr wahrscheinlich, daß der Oberlenker an das Hauptschutzschild anstößt und dieses wiederum beschädigt.

Die der Erfindung zugrundeliegende Aufgabe wird darin gesehen, eine Schutzabdeckung für Zapfwellen der eingangsgenannten Art anzugeben, welche beispielsweise durch einen Oberlenker nach unten gedrückt werden kann, ohne daß die Schutzabdeckung beschädigt wird und wobei eine zuverlässige Abschirmung der Zapfwelle erhalten bleibt. Eine weitere Aufgabe wird darin gesehen, die Schutzabdeckung so auszubilden, daß die hochgeklappte Schutzabdeckung sich durch Einwirkung des Oberlenkers in die Betriebsstellung absenken läßt.

Die Aufgabe wird bei einer Schutzabdeckung der gattungsgemäßen Art erfindungsgemäß durch die kennzeichnenden Merkmale des Patentanspruches 1 gelöst. Die Schutzabdeckung ist an ihrer Oberseite mit einer verschwenkbar befestigten, vorgespannten mittleren Klappe versehen. Befindet sich die Schutzabdeckung in der normalen Betriebsstellung, und wird hierbei der Oberlenker zu weit abgesenkt, so wird die Klappe einfach durch den Oberlenker nach unten gedrückt. Wird der Oberlenker wieder angehoben, so klappt die federvorgespannte Klappe wieder nach oben zurück in die normale Betriebsstellung.

Die Klappe kann auch dazu herangezogen werden, den Hauptkörper der Schutzabdeckung dann in die normale Betriebsstellung zu überführen, wenn bei hoch geklapptem Hauptkörper der Oberlenker gegen die Klappe drückt. Der Hauptkörper der Schutzabdeckung ist um ortsfest gelagerte Kippzapfen verschwenkbar. Der Kippzapfen wird durch Schlitze in der Schutzabdeckng aufgenommen, so daß der Hauptkörper auch entlang der Schlitze verschiebbar ist. Die Klappe läßt sich jedoch nicht verschieben, sondern lediglich um die Kippzapfen verschwenken. Die Klappe weist eine Lasche auf, welche an dem oberen Ende der Schutzabdeckung eingreifen kann, sofern letztere sich in angehobener Lage befindet. Die Lasche greift jedoch nicht an der Schutzabdeckung an, wenn letztere in ihre normale Arbeitsstellung abgesenkt ist.

In der angehobenen Lage ruht die Schutzabdeckung auf dem Kippzapfen, der sich an einem Ende des Schlitzes befindet. Dabei nimmt die Schutzabdeckung eine stabile Lage ein. In dieser Lage greift die Lasche der Klappe an der Schutzabdeckung an. Wird die Klappe aus dieser Lage durch den Oberlenker nach unten gedrückt, so schwenkt sie um den Kippzapfen, und die Lasche hebt die Schutzabdeckung an, so daß sich der Drehpunkt der Schutzabdeckung entlang des Schlitzes zum anderen Ende as Schlitzes bewegt. Während der Verschiebung des Kippzapfens von einem Schlitzende zum anderen wird die Feder der Klappe gespannt und dann wieder entlastet, da die Feder zwischen den Schlitzenden die größte Länge einnimmt. Es ergibt sich somit eine Sprungwerkkonfiguration, welche mit der Schwerkraft die Schutzabdeckung in ihre normale Arbeitsstellung herunter drückt. Durch eine weitere Abwärtsbewegung des Oberlenkers kann dann, wie bereits beschrieben wurde, die mittlere Klappe herunter gedrückt werden, falls dies erforderlich ist.

Hieraus wird klar, daß durch die vorliegende Erfindung eine Zapfwellenschutzabdeckung bereitgestellt wird, welche bei einer Absenkung eines Oberlenkers nicht beschädigt wird, und zwar unabhängig von der Lage, in der die Bedienungsperson die Schutzabdeckung zurückgelassen hat.

Weitere bevorzugte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und Weiterbildungen der Erfindung beschrieben und näher erläutert werden.

Es zeigt:
- Fig. 1: die perspektivische Ansicht einer erfindungsgemäßen Schutzabdeckung für einen Zapfwellenantrieb am hinteren Ende eines Schleppers,
- Fig. 2: die Aufsicht der Schutzabdeckung gemäß Fig. 1 in Normalstellung,
- Fig. 3: eine Seitenansicht der Schutzabdeckung entlang der Linie 3-3 in Fig. 2 in normaler Betriebsstellung,
- Fig. 4: eine Querschnittsdarstellung der Schutzabdeckung entlang der Linie 4-4 in Fig. 2, wobei die mittlere Klappe durch den Oberlenker nach unten gedrückt ist,
- Fig. 5: eine Querschnittsdarstellung der Schutzabdeckung entlang der Linie 5-5 in Fig. 2, wobei die Schutzabdeckung sich in angehobener Stellung befindet, und
- Fig. 6: die Detaildarstellung einer zu Fig. 1 alternativen Ausbildung der mittleren Klappe der Schutzabdeckung.

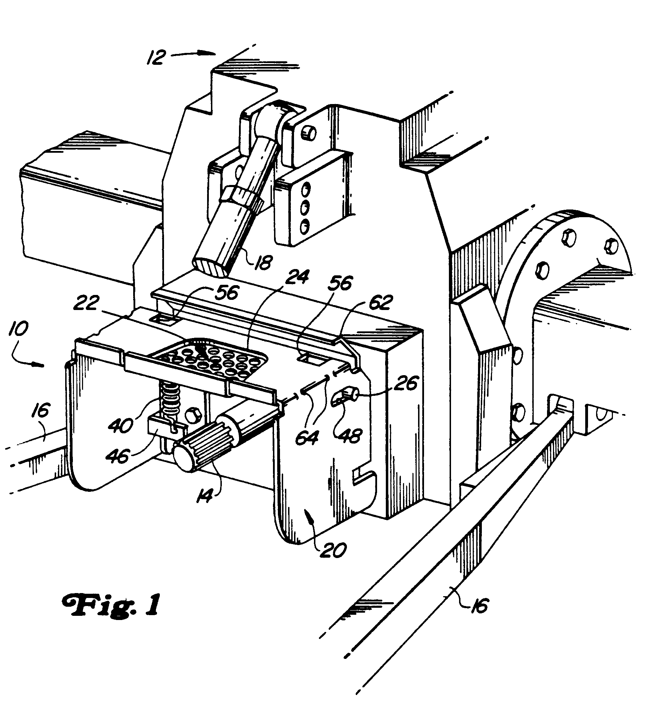

In Fig. 1 ist eine Schutzabdeckung 10 für das freie über den hinteren Rumpf eines Schleppers 12 hervorstehende Ende einer Zapfwelle 14 dargestellt. Der Schlepper 12 weist eine 3-Punkt-Anhängevorrichtung (lediglich teilweise dargestellt) auf, die zwei Unterlenker 16 und einen Oberlenker 18 enthält und um die Schutzabdeckung gruppiert ist

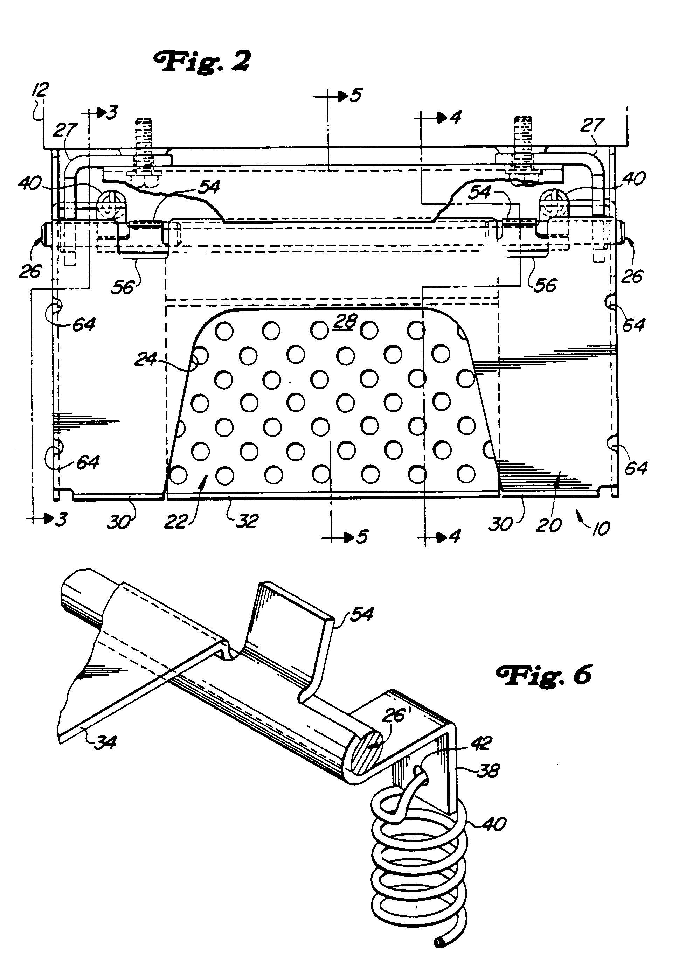

Gemäß Fig. 1 und 2 besteht die erfindungsgemäße Schutzabdeckung 10 aus zwei Hauptbereichen, und zwar dem Hauptkörper 20 und der mittleren Klappe 22. Durch die Klappe 22 läßt sich ein Ausschnittsbereich 24 des Hauptkörpers 20 verschließen. Wie noch erläutert werden wird, ist die Klappe 22 in Richtung nach oben vorgespannt, so daß die Klappe 22 gewöhnlich den Ausschnitt 24 des Hautkörpers 20 verschließt.

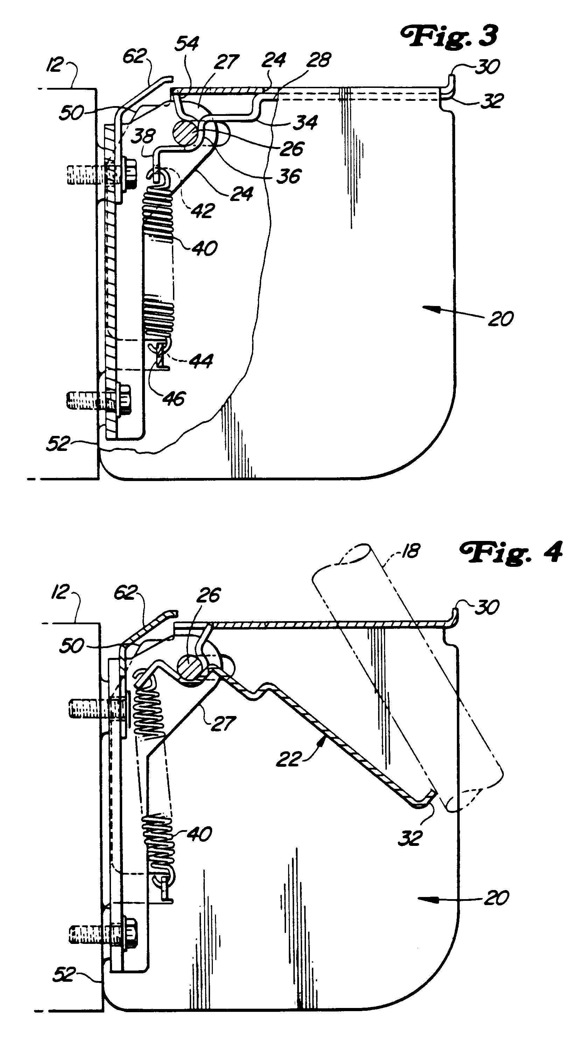

Gemäß Fig. 2 und 3 sind die Seitenteile des Hauptkörpers 20 im wesentlichen rechteckig ausgerichtet, wobei die Kanten vorzugsweise abgerundet sind. Sowohl der Hauptkörper 20 als auch die Klappe 22 lassen sich um Kippzapfen 26, welche mittels Stützen 27 ortsfest am Schlepperrumpf gelagert sind, verkippen. Es sind vorzugsweise zwei Kippzapfen 26 vorgesehen, und zwar je einer auf jeder Seite der Schutzabdeckung 20 beidseits der Zapfwelle 14. Alternativ hierzu kann auch ein einzelner Stab 26′ verwendet werden, welcher sich zwischen den beiden Seiten der Schutzabdekkung 20 erstreckt, wie es aus Fig. 6 ersichtlich ist.

Die Klappe 22 enthält einen Hauptverschlußabschnitt 28, durch welchen in der normalen Stellung der Ausschnittsbereich 24 des Hauptkörpers 20 verschlossen wird. Vorzugsweise weisen sowohl der Hauptkörper 20 als auch die Klappe 22 an ihren äußeren Enden nach oben umgebogene Kanten 30, 32 auf.

Die Klappe 22 weist ferner einen Zwischenbereich 34 auf, welcher den Hauptverschlußbereich 28 mit den Bereichen 36 der Klappe 22 verbindet, die mit den Kippzapfen 26 in Verbindung stehen. Die Zwischenbereiche 34 der Klappe 22 sind derart geformt, daß der Hauptverschlußbereich 28 gegen die obere Außenseite des Hauptkörpers 20 gedrückt wird, und zwar unabhängig von dem Abstand zwischen dem Kippzapfen 26 und dieser Oberfläche.

An jeder Seite der Klappe 22 steht je eine Federlasche 38 ab, die sich bezüglich der Kippzapfen 26 auf der zu dem Zwischenabschnitt 34 gegenüberliegenden Seite befinden, was am besten aus den Fig. 3 und 6 ersichtlich ist. Das eine Ende einer Zugfeder 40 ist in ein Loch 42 in solch einer Federlasche 38 eingehängt. Das andere Ende der Feder 40 ist in das Loch 44 einer Federlasche 46 eingehängt, welche aus einem nach innen gebogenen Teil der benachbarten Seitenwandung der Schutzabdeckung 10 ausgebildet ist. Die Federlasche 46 ist am besten in Fig. 1 erkennbar. Die Federn 40 dienen gewöhnlich dazu, den Hauptverschlußabschnitt 28 der Klappe 22 gegen die obere Außenseite des Hauptkörpers 20 der Schutzabdeckung 10 vorzuspannen, wobei der Ausschnitt 24 verschlossen wird.

Wie aus Fig. 4 hervorgeht, drückt der Oberlenker 18, wenn er weit abgesenkt wird, gegen die umgebogene Kante 32 der Klappe 22. Die Breite der Klappe 22 und des Ausschnittes 24 werden so festgelegt, daß selbst bei maximaler Verschwenkung der Schutzabdeckung 10 in die horizontale Richtung der Oberlenker 18 lediglich in den Bereich der Klappe 22 eingreift. Durch solch einen Eingriff, und bei weiterer Absenkung des Oberlenkers 18, wird die Klappe 22 nach unten gedrückt, so daß sie um die Kippzapfen 26 schwenkt und die Zugfedern 40 dehnt. Bei nachfolgendem Anheben des Oberlenkers 18 ziehen sich die Federn 40 wieder zusammen und heben die Klappe 22 zurück in die Normalstellung, wie es in Fig. 3 dargestellt ist. Es ist ersichtlich, daß diese Absenkung des Oberlenkers 18 keine Beschädigung der Schutzabdeckung 10 verursacht.

Um einen Zugang zu der Zapfwelle 14 während des An- oder Abkuppelns zu gewährleisten, läßt sich die Schutzabdeckung 10 nach oben um die Kippzapfen 26 verschwenken. Eine stabile Lage der Schutzabdeckung 10 in hoch geklappter Stellung wird durch Kipplagerschlitze 48 in den Seitenteilen des Hauptkörpers 18 und Abschrägungen 50 an den oberen, dem Schlepperrumpf zugewandten Ecken des Hauptkörpers 20 erreicht. Insbesondere ist der Hauptkörper 20 mittels seiner Kipplagerschlitze 48 an den Kippzapfen 26 gelagert. Die Schlitzlänge und -lage sind relativ zu den Kippzapfen 26, den Federlaschen 38, den Federn 40 und den Federlaschen 46 so gewählt, daß dann, wenn die Kippzapfen 26 sich an einem Ende des Schlitzes 48 befinden, der Drehpunkt a auf einer Seite der Federn 40 liegt, und wenn die Kippzapfen 26 sich an dem anderen Ende des Schlitzes 48 befinden, der Drehpunkt b auf der anderen Seite der Federn 40 liegt. Da die Klappe 22 und deren Federlasche 38 relativ zum Drehpunkt 26 und nicht zum Hauptkörper 20 festliegen, ergibt sich eine Sprungwerks- oder over-center-Konfiguration. Wird der Hauptkörper 20 zwischen seiner angehobenen und abgesenkten Lage bewegt, verschieben sich die Zapfen 26 entlang der Schlitze 48 von einer zur anderen Endlage.

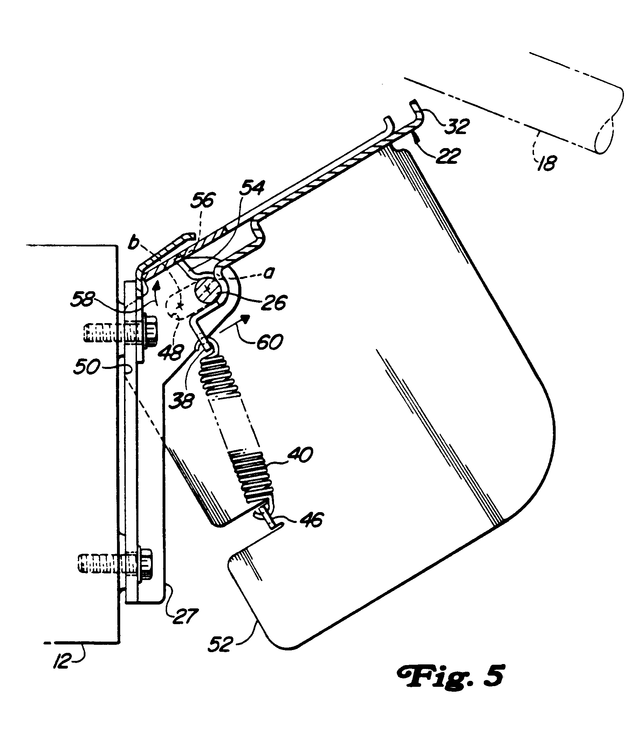

Bei dieser Verschiebung werden die Federn 40 zunächst gestreckt und ziehen sich dann wieder zusammen. Zwischen den Endlagen haben die Federn die größte Länge. Dies bedeutet, daß die Enden der Schlitze 48 stabile Lagen darstellen. Die Abschrägungen 50 an dem Hauptkörper 20 dienen dazu, die Schutzabdeckung 10 festzulegen, indem sie sich am Schlepperrumpf 12 abstützen, wenn die Schutzabdeckung 10 sich in der angehobenen Position befindet. Dabei liegt der Kippzapfen 26 an dem Drehpunkt a, wie es Fig. 5 darstellt. Im Gegensatz hierzu wird dann, wenn die Kippzapfen 26 sich an dem Drehpunkt b befinden, eine stabile Lage durch Abstützung der Kante 52 des Hauptkörpers 20 an dem Schlepperrumpf 12 eingenommen, wie dies die Fig. 3 und 4 zeigen.

Die mittlere Klappe 22 kann auch dazu benutzt werden, die Schutzabdeckung 10 runter in ihre normale Lage zu bewegen. Dies erfolgt aufgrund einer Berührung mit dem Oberlenker 18, wenn die Bedienungsperson die Schutzabdeckung 10 in der in Fig. 5 dargestellten angehobenen Position belassen hatte. Die Klappe 22 enthält an jeder ihrer Seiten Hebelaschen 54, welche in Hebeschlitze 56, die sich in der oberen Außenseite des Hauptkörpers 20 befinden, eingreifen können. Aus Fig. 5 ist ersichtlich, daß dann, wenn der Oberlenker 18 herunter auf die Kante 32 der Klappe 22 gedrückt wird, die Klappe 22 um die Kippzapfen 26 verdreht wird. Hierbei bewegen sich die Hebelaschen 54 in die Richtung, die durch den Pfeil 58 angezeigt ist, und drücken gegen die Kanten der Hebeschlitze 56. Dadurch wird der Hauptkörper 20 in die durch den Pfeil 60 angezeigte Richtung angehoben, wodurch die Kipplagerschlitze 48 so verschoben werden, daß die Kippzapfen 26 eine Lage zwischen a und b einnehmen. Wird dieser Vorgang fortgesetzt, so werden die Schlitze 48 schließlich so weit verschoben, daß die Kippzapfen 22 ganz bis zum Drehpunkt b verschoben werden. Der Hauptkörper 20 wird dann durch Gravitationskräfte und die Federn 40 nach unten in die normale Stellung, wie sie in Fig. 3 dargestellt ist, gezogen. Bewegt sich der Oberlenker 18 weiter nach unten, so wird er an der Klappe 22 angreifen und diese nach unten drücken, wie es bereits im Zusammenhang mit Fig. 4 beschrieben wurde.

Es sind veschiedene weitere vorteilhafte Ausgestaltungen der Erfindung vorgesehen. So befindet sich an der Hinterseite des Hauptkörpers 20 vorzugsweise ein Schutzteil 62, welches alle Öffnungen auf der Rückseite der Schutzabdekkung 10 abdeckt. Das Schutzteil 62 ist zweckmäßigerweise etwas nach oben abgebogen, um ein Verschwenken der Schutzabdeckung 10 in die obere Position (siehe Fig. 5) zu ermöglichen. Wie es am besten aus den Fig. 1 und 2 ersichtlich ist, sind ferner Verstärkungsrippen 64 in den Winkelecken des Hauptkörpers 20 vorgesehen, die ein Einknicken verhindern sollen. Obwohl Schutzabdeckungen für Zapfwellen gewöhnlich nicht als Trittstufe verwendet werden sollen und es auch nicht ratsam ist, diese als solche zu benutzen, werden sie dennoch gelegentlich von Bedienungspersonen als Trittstufe benutzt. Folglich ist es auch empfehlenswert, die mittlere Klappe 22 zu performieren oder auf andere Weise kenntlich zu machen und Warnhinweise anzubringen, durch die ein Auftreten auf die Klappe 22 verhindert werden kann.

## Patentansprüche

1. Schutzabdeckung für Zapfwelle (14) mit einem im wesentlichen U-förmigen Hauptkörper (20), durch den das Zapfwellenende von oben durch einen als Basisschenkel ausgebildeten mittleren Teil und seitlich durch zwei frei sich vom Basisschenkel aus nach unten erstreckende Schenkel abgedeckt werden kann, dadurch gekennzeichnet, daß der Hauptkörper (20) in seinem mittleren Teil eine Aussparung (24) aufweist, die durch eine verschwenkbare Klappe (22), die Bestandteil der Schutzabdeckung ist, verschließbar ist, und daß zwischen Hauptkörper (20) und Klappe (22) Vorspannmittel vorgesehen sind, die die Klappe (22) in Richtung nach oben vorspannen und die bestrebt sind, die Klappe (22) in eine erste Lage zu bringen, in der sie die Aussparung (24) verschließt.

2. Schutzabdeckung nach Anspruch 1, dadurch gekennzeichnet, daß die Klappe (22) an wenigstens einem Kippzapfen (26) schwenkbar gelagert ist und daß derselbe Kippzapfen (26) als Verkippachse für den Hauptkörper (20) dient.

3. Schutzabdeckung nach Anspruch 2, dadurch gekennzeichnet, daß in jedes Seitenteil des Hauptkörpers (20) Schlitze (48) eingelassen sind und daß sich der wenigstens eine Kippzapfen (26) wenigstens bis in die Schlitze (48) erstreckt, und ein Schwenklager für den Hauptkörper (20) bildet.

4. Schutzabdeckung nach einem der Ansprüche 1 bis 3, dadurch gekennzeichnet, daß das Vorspannmittel wenigstens eine an der Klappe (22) angeformte Lasche (38), welche sich hinsichtlich des Drehpunktes zu der dem Verschlußteil der Klappe abgewandten Seite erstreckt, wenigstens eine an einem Seiteteil des Hauptkörpers (20) angeformten Lasche (46) und wenigstens eine Zugfeder (40) enthält, welche die beiden Laschen (38, 46) miteinander verbindet.

5. Schutzabdeckung nach Anspruch 3 oder 4, dadurch gekennzeichnet, daß die beiden sich gegenüberliegenden Endpunkte der Schlitze (48) beidseits einer Linie liegen, die durch den Angriffspunkt der Zugfeder (40) an der Klappenlasche (38) und den Angriffspunkt der Zugfeder (40) an der Seitenteillasche (46) verläuft.

6. Schutzabdeckung nach einem der Ansprüche 3 bis 5, dadurch gekennzeichnet, daß sich der Hauptkörper (20) zwischen einer normalen Betriebsstellung, bei der sich der wenigstens eine Kippzapfen (26) in einer ersten Endlage des Schlitzes (48) befindet, und einer angehobenen Stellung, bei der sich der Kippzapfen (26) in der zweiten Endlage des Schlitzes (48) befindet, verschwenken läßt.

7. Schutzabdeckung nach einem der Ansprüche 1 bis 6, dadurch gekennzeichnet, daß sich der Hauptkörper (20) zwischen einer Grundstellung und einer angehobenen Stellung verkippen läßt, daß die obere Außenseite des Hauptkörpers (20) wenigstens eine Hebeausnehmung (56) enthält und daß die Klappe (22) wenigstens eine abstehende Hebelasche (54) aufweist, die mit der Hebeausnehmung (56) derart in Eingriff bringbar ist, daß die Hebelasche (54) gegen eine Seite der Hebeausnehmung (56) drückt, um den Hauptkörper (20) aus seiner angehobenen Stellung in seine Grundstellung zu bewegen.

8. Schutzabdeckung nach Anspruch 7, dadurch gekennzeichnet, daß Hebelasche (54) und Hebeausnehmung (56) so angeordnet sind, daß dann, wenn der Hauptkörper (20) durch die Hebelasche (54) aus seiner angehobenen Stellung weiter nach oben verschwenkt wird, die Hebeausnehmung derart verschoben wird, daß der Kippzapfen (26) von einem Ende des Kipplagerschlitzes (48) zu dessen entgegengesetztem Ende gleitet und den Hauptkörper (20) veranlaßt, seine normale Betriebsstellung einzunehmen.

9. Schutzabdeckung nach Anspruch 7 oder 8, dadurch gekennzeichnet, daß die wenigstens eine Hebelasche (54) sich zur anderen Seite des Kippzapfens (26) erstrecken als der Teil der Klappe (22), der die Aussparung (24) des Hauptkörpers (20) verschließt.

10. Schutzabdeckung nach einem der Ansprüche 4 bis 9, dadurch gekennzeichnet, daß die wenigstens eine Klappenlasche (38), die wenigstens eine Hauptkörperlasche (36) und die Kipplagerschlitze (48) so angeordnet sind, daß sie eine Übertotpunkt-Konfiguration derart bilden, daß die Feder (40) ihre größte Ausdehnung erreicht, wenn der Hauptkörper (20) eine Lage zwischen seiner normalen Betriebslage und seiner angehobenen Lage einnimmt.

11. Schutzabdeckung nach einem der Ansprüche 1 bis 10, dadurch gekennzeichnet, daß die Schutzabdeckung (10) an einem Fahrzeug mit Dreipunkt-Anhängevorrichtung eine Zapfwelle (14) abdeckt und daß die Aussparung (24) und die Klappe (22) so bemessen und angeordnet sind, daß der Oberlenker (18) der Anhängevorrichtung lediglich an der Klappe (22), nicht jedoch an dem Hauptkörper (20) angreifen kann.

12. Schutzabdeckung nach einem der Ansprüche 1 bis 11, dadurch gekennzeichnet, daß wenigstens der Teil der Klappe (22), der die Aussparung (24) des Hauptkörpers (20) verschließt, perforiert ausgebildet ist.

## Claims

1. Protective cover for a power take-off shaft (14) with a substantially U-shaped main member (20), by means of which the end of the power take-off shaft can be covered from above by a central portion in the form of a basic leg, and can be covered laterally by two legs extending freely downwards from said basic leg, characterized in that the main member (20) has in its central portion a recess (24) which is closable by means of a pivotable flap (22) which is an integral part of the protective cover, and in that pretensioning means are provided between the main member (20) and the flap (22), said means tensioning the flap (22) in an upward direction and urging the flap (22) into a first position in which it closes the recess (24).

2. Protective cover according to claim 1, characterized in that the flap (22) is pivotally mounted on at least one tilting pin (26), and in that the same tilting pin (26) acts as a tilting axis for the main member (20).

3. Protective cover according to claim 2, characterized in that slots (48) are provided in each lateral portion of the main member (20), and in that the at least one tilting pin (26) extends at least into the slots (48), forming a pivotal bearing for the main member (20).

4. Protective cover according to one of claims 1 to 3, characterized in that the pretensioning means includes at least one lug (38) formed on the flap (22) and extending relative to the point of rotation towards the side facing away from the closure portion of the flap, at least one lug (46) formed on a lateral portion of the main member (20), and at least one traction spring (40), which connects the two lugs (38, 46) together.

5. Protective cover according to claim 3 or 4, characterized in that the two mutually-opposite terminal points of the slots (48) lie on both sides of a line which passes through the point of engagement of the traction spring (40) on the flap lug (38), and the point of engagement of the traction spring (40) on the lateral portion lug (46).

6. Protective cover according to one of claims 3 to 5, characterized in that the main member (20) may be pivoted between a normal operating position in which the at least one tilting pin (26) is located in one end-position of the slot (48), and a raised position in which the tilting pin (26) is located in the second end-position of the slot (48).

7. Protective cover according to one of claims 1 to 6, characterised in that the main member (20) may be tilted between a basic position and a raised position, in that the upper external side of the main member (20) includes at least one raising aperture (56), and in that the flap (22) has at least one projecting raising lug (54) which may be brought into engagement with the raising aperture (56) in such a way that the raising lug (54) presses against one side of the raising aperture (56), in order to move the main member (20) out of its raised position into its basic position.

8. Protective cover according to claim 7, characterised in that the raising lug (54) and the raising aperture (56) are so disposed that, when the main member (20) is pivoted further upwards out of its raised position by the raising lug (54), the raising aperture is displaced in such a way that the tilting pin (26) slides from one end of the tilt bearing slot (48) to its opposite end, causing the main member (20) to adopt its normal operative position.

9. Protective cover according to claim 7 or 8, characterised in that the at least one raising lug (54) extends to the other side of the tilting pin (26) as a portion of the flap (22) which closes the recess (24) in the main member (20).

10. Protective cover according to one of claims 4 to 9, characterised in that the at least one flap lug (38), the at least one main member lug (36) and the tilt bearing slots (48) are so disposed that they form a top dead centre configuration, in such a way that the spring (40) reaches its maximum stretch when the main member (20) adopts a position between its normal operating position and its raised position.

11. Protective cover according to one of claims 1 to 10, characterised in that the protective cover (10), on a vehicle with a three-point hitch, covers a power take-off shaft (14), and in that the recess (24) and the flap (22) are so dimensioned and disposed that the upper guide (18) of the hitch device can engage only on the flap (22), but not on the main member (20).

12. Protective cover according to one of claims 1 to 11, characterised in that at least the portion of the flap (22) which closes the recess (24) in the main member (20) is perforated in form.

## Revendications

1. Couvercle de protection pour arbre de prise de force (14), avec un corps principal (20) essentiellement en forme de U, qui permet de recouvrir l'extrémité de l'arbre de prise de force sur le dessus par une partie médiane conçue comme branche de base, et sur les côtés par deux branches s'étendant librement vers le bas à partir de la branche de base, **caractérisé** en ce que le corps principal (20) présente, dans sa partie médiane, un évidement (24) qui peut être fermé par un volet pivotant (22) faisant partie du couvercle de protection, et en ce que des moyens de précontrainte, prévus entre le corps principal (20) et le volet (22), précontraignent le volet (22) vers le haut et tendent à l'amener dans une première position dans laquelle il ferme l'évidement (24).

2. Couvercle de protection selon la revendication 1, **caractérisé** en ce que le volet (22) est monté à pivotement sur au moins un tourillon (26) et en ce que ce même tourillon (26) sert d'axe de basculement pour le corps principal (20).

3. Couvercle de protection selon la revendication 2, **caractérisé** en ce que des fentes (48) sont pratiquées dans chaque partie latérale du corps principal (20) et en ce que le ou chaque tourillon (26) s'étend au moins jusque dans une fente (48) et constitue un palier de basculement pour le corps principal (20).

4. Couvercle de protection selon l'une quelconque des revendications 1 à 3, **caractérisé** en ce que les moyens de précontrainte comprennent au moins une attache (38), formée sur le volet (22) et s'étendant, par rapport au point de pivotement, du côté opposé à la partie d'obturation du volet, au moins une attache (46) formée sur une partie latérale du corps principal (20) et au moins un ressort de traction (40), reliant entre elles les deux attaches (38, 46).

5. Couvercle de protection selon la revendication 3 ou 4, **caractérisé** en ce que les deux extrémités opposées des fentes (48) se trouvent de part et d'autre d'une droite passant par le point d'attaque du ressort de traction (40) sur l'attache de volet (38) et le point d'attaque du ressort de traction (40) sur l'attache de partie latérale (46).

6. Couvercle de protection selon l'une quelconque des revendications 3 à 5, **caractérisé** en ce que le corps principal (20) peut être basculé entre une position de service normale, dans laquelle le ou chaque tourillon (26) se trouve dans une première position finale dans la fente (48), et une position relevée, dans laquelle le tourillon (26) se trouve dans la seconde position finale dans la fente (48).

7. Couvercle de protection selon l'une quelconque des revendications 1 à 6, **caractérisé** en ce que le corps principal (20) peut être basculé entre une position de base et une position relevée, en ce que le côté extérieur supérieur du corps principal (20) contient au moins un évidement de levage (56) et en ce que le volet (22) présente au moins une patte de levage en saillie (54), qui peut être amenée en engagement avec l'évidement de levage (56) de telle sorte que la patte de levage (54) appuie contre un côté de l'évidement de levage (56), pour déplacer le corps principal (20) de sa position relevée dans sa position de base.

8. Couvercle de protection selon la revendication 7, **caractérisé** en ce que la patte de levage (54) et l'évidement de levage (56) sont disposés de telle sorte que, lorsque le corps principal (20) se trouvant dans sa position relevée est encore plus pivoté vers le haut par la patte de levage (56), l'évidement de levage est déplacé de telle sorte que le tourillon (26) glisse d'une extrémité de la fente (48) du palier de basculement à l'extrémité opposée, forçant ainsi le corps principal (20) à prendre sa position de service normale.

9. Couvercle de protection selon la revendication 7 ou 8, **caractérisé** en ce que la ou chaque patte de levage (54) s'étend, par rapport au tourillon (26), de l'autre côté que la partie du volet (22) qui ferme l'évidement (24) du corps principal (20).

10. Couvercle de protection selon l'une quelconque des revendications 4 à 9, **caractérisé** en ce que la ou chaque attache de volet (38), la ou chaque attache de corps principal (46) et les fentes de palier de basculement (48) sont disposées de manière à former une configuration de dépassement de point mort, de telle sorte que le ressort (40) atteint sa plus grande extension lorsque le corps principal (20) prend une position située entre sa position de service normale et sa position relevée.

11. Couvercle de protection selon l'une quelconque des revendications 1 à 10, **caractérisé** en ce que le couvercle de protection (10) recouvre un arbre de prise de force (14) d'un véhicule doté d'un dispositif d'attelage en trois points et en ce que l'évidement (24) et le volet (22) sont dimensionnés et disposés de telle sorte que le bras oscillant supérieur (18) du dispositif d'attelage peut uniquement agir sur le volet (22), mais non sur le corps principal (20).

12. Couvercle de protection selon l'une quelconque des revendications 1 à 11, **caractérisé** en ce qu'au moins la partie du volet (22) qui ferme l'évidement (24) du corps principal (20) est réalisée perforée.
